# EUROPEAN PATENT APPLICATION

(11) **EP 4 706 368 A1**
(43) Date of publication of application: **11.03.2026**
(21) Application number: 25194895.6
(22) Date of filing: 08.08.2025
(51) Int. Cl.: A01C 7/20

(54) **METHODS OF USING AGRICULTURAL IMPLEMENTS WITH VARIABLE ROW SPACING**

(30) Priority: 09.09.2024 US 202463692519 P
(71) Applicant: Agco Corporation, Duluth, Georgia 30096 (US)
(72) Inventor: FANSHIER, Benjamin Anson, Hesston, 67062-0969 (US); DUERKSEN, Ross, Hesston, 67062 (US); FIGGER, Robert, Hesston (US)
(74) Representative: AGCO Intellectual Property Department

(57) **Abstract**

A method of using an agricultural implement includes translating at least some row units laterally along a toolbar such that spacing between adjacent row units of the plurality is non-uniform. A first subset includes row units intended for use, and a second subset includes row units intended to not be used in the next planting operation. The spacing between adjacent row units of the first subset of row units is substantially uniform. The method includes securing the row units to the toolbar after translating at least some of the row units, raising each of the second subset of the row units relative to the toolbar from a working position to a stowed position, and planting an agricultural field using the first subset of the row units while the second subset of the row units are carried by the toolbar in the stowed position.

## Description

### CROSS-REFERENCE TO RELATED APPLICATIONS

n/a

### FIELD

Embodiments of the present disclosure relate generally to planter implements and other agricultural equipment, and in particular, implements having row units that can be adjusted to be at different lateral positions along a toolbar.

### BACKGROUND

Agricultural machines such as planters with a plurality of row units are used to plant seeds upon or in the ground. Planters may have a central portion pulled by a tractor, and may have wings extending from either side. The individual row units, mounted to the center section or to a wing, typically deliver seeds into separate rows. The row units may receive seed from a common central hopper, which may be used to limit the effect of excessive weight on the wings. That is, the center section may be supported by more wheels or larger wheels, and thus may be better able to support the weight of the filled central hopper without exerting excessive pressure on the ground. To increase speed with which fields can be planted, planters are becoming wider and the seed hoppers that feed the row units are becoming larger.

Different crops may be planted with different spacing between rows (which may be referred to in the art as "row spacing" or "row width"). This is commonly done with different planter implements, because reconfiguring an implement to have different row spacing is difficult and time-consuming. For example, to change row spacing, some row units are physically moved along a toolbar of a planter implement. Other row units are removed entirely from the implement for wider spacing, or added for narrower spacing. Moving and removing row units can be a time-consuming and labor-intensive process, and if not performed carefully, can cause damage to the implement and/or the row units, and can lead to spacing errors.

### BRIEF SUMMARY

Some embodiments include a method of using an agricultural implement having a plurality of row units comprising ground-engaging tools and carried by a toolbar. The plurality of row units comprise a first subset and a second subset, and each of the row units carried by the toolbar is a member of exactly one of the first subset or the second subset. The method comprises translating at least some of the row units laterally along the toolbar such that spacing between adjacent row units of the first subset is substantially uniform and spacing between adjacent row units of the plurality is non-uniform; securing the at least some of the row units to the toolbar after translating the at least some of the row units; raising each of the second subset of the row units relative to the toolbar with hydraulic cylinders connected to corresponding parallel linkage systems from a working position to a stowed position; and planting an agricultural field using the first subset of the row units while the second subset of the row units are carried by the toolbar in the stowed position.

In certain embodiments, raising each of the second subset of the row units relative to the toolbar from a working position to a stowed position comprises raising each of the second subset of the row units to prevent contact between the ground-engaging tools of the second subset of the row units with a ground surface.

In some embodiments, all of the ground-engaging tools of a selected row unit are raised off a ground surface before translating the selected row unit laterally along the toolbar.

Translating the at least some of the row units laterally along the toolbar may be performed without disconnecting any electrical or hydraulic lines connected to the row units.

At least some of the row units may be translated laterally along the toolbar in a first direction, and at least another row unit may be translated in a second direction opposite the first direction.

At least some of the row units may be aligned with markings on the toolbar.

The row units may be translated by sliding the row units along the toolbar.

For example, the row units may be slid along the toolbar by activating a plurality of actuators. In such embodiments, the row units may be secured to the toolbar using the actuators.

The row units may be unfastened from the toolbar before translating the row units laterally along the toolbar.

For example, the method may include loosening at least one clamp fixing each of the at least some of the row units to the toolbar. In such embodiments, securing the at least some of the row units to the toolbar may comprise tightening the at least one clamp.

Within the scope of this application it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified top view of a tractor pulling an implement;
FIG. 2A is a simplified top view of a toolbar and row units of the implement shown in FIG. 1;
FIG. 2B is a simplified rear view of the toolbar and row units of the implement shown in FIG. 1;
FIG. 3A is a simplified top view of the toolbar and row units of the implement shown in FIG. 1 after conversion of the implement to a wider row spacing than that shown in FIG. 2A;
FIG. 3B is a simplified rear view of the toolbar and row units of the implement shown in FIG. 1 after conversion of the implement to the wider row spacing;
FIG. 3C is a simplified perspective view of a portion of the toolbar and some row units of the implement shown in FIG. 1 after conversion of the implement to the wider row spacing;
FIG. 3D is a simplified side view of a portion of the toolbar and some row units of the implement shown in FIG. 1 after conversion of the implement to the wider row spacing;
FIG. 4 illustrates a method of configuring and using the implement shown in FIG. 1 to plant a field with wider row spacing.

### DETAILED DESCRIPTION

The illustrations presented herein are not actual views of any implement or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

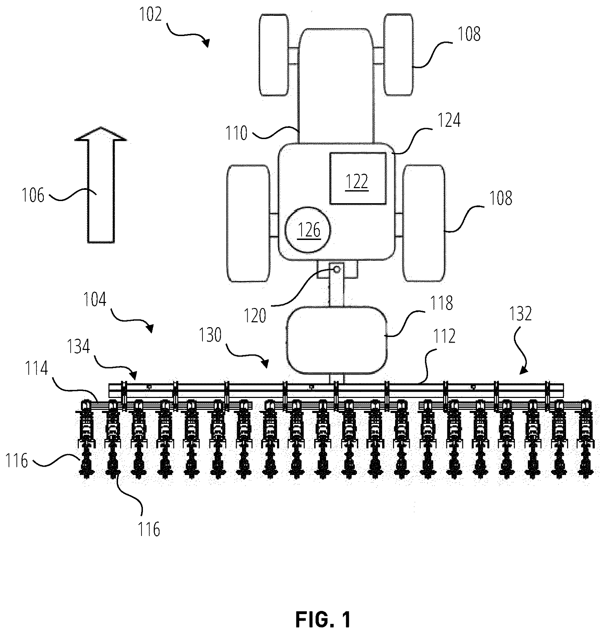

FIG. 1 illustrates a tractor 102 drawing an agricultural implement 104 in a forward direction 106. The tractor 102 has wheels 108, an engine, a chassis 110, and other elements as known in the art. The implement 104 has a frame 112 carrying a toolbar 114 supporting row units 116. The row units 116 may be connected to a central hopper 118 containing seed to be planted and/or fertilizer to be applied. That is, the row units 116 may be planter and/or fertilizer row units of any design, which are generally known in the art. Each row unit 116 may include row cleaner(s), opening disc(s), gauge wheel(s), seed meter(s), seed hopper(s), a seed tube, closing wheel(s), fertilizer applicator(s), sensor(s), etc.

The implement 104 is connected to the tractor 102 by a tow hitch 120. A computer 122, which may include a central processing unit ("CPU"), memory, implement controller, and graphical user interface ("GUI") (e.g., a touch-screen interface), is typically located in an operator cabin 124 of the tractor 102. A global positioning system GPS receiver 126 may be mounted to the tractor 102 and connected to communicate with the computer 122. The implement controller is configured to communicate with the row units 116 and/or the GPS receiver 126, such as by wired or wireless communication.

The frame 112 may include a first section 130 (e.g., a center section) configured to be towed by the tractor 102, and one or more wing sections 132, 134 hingedly coupled to the first section 130. For example, and as shown in FIG. 1, the first section 130 may be a center section, and two wing sections 132, 134 may be attached to opposite sides thereof. The wing sections 132, 134 may fold for transport or storage, and unfold (as shown in FIG. 1) for planting, fertilizing, or other field operations. The implement 104 may optionally be supported in the field or in transport one or more wheels coupled to the frame 112, as described, for example, in U.S. Patent Application Publication 2021/0315148 A1, "Agricultural Implements Having Row Unit Position Sensors and a Rotatable Implement Frame, and Related Control Systems and Methods," published October 14, 2021. In such embodiments, the wheels may support any or all of the wing sections 132, 134. In certain embodiments, the center section 130 may be omitted, and two wing sections 132, 134 may be connected directly to one another, for example, as described in U.S. Patent Application Publication 2021/0315147 A1, "Systems Comprising Agricultural Implements Connected to Lifting Hitches and Related Control Systems and Methods," published October 14, 2021.

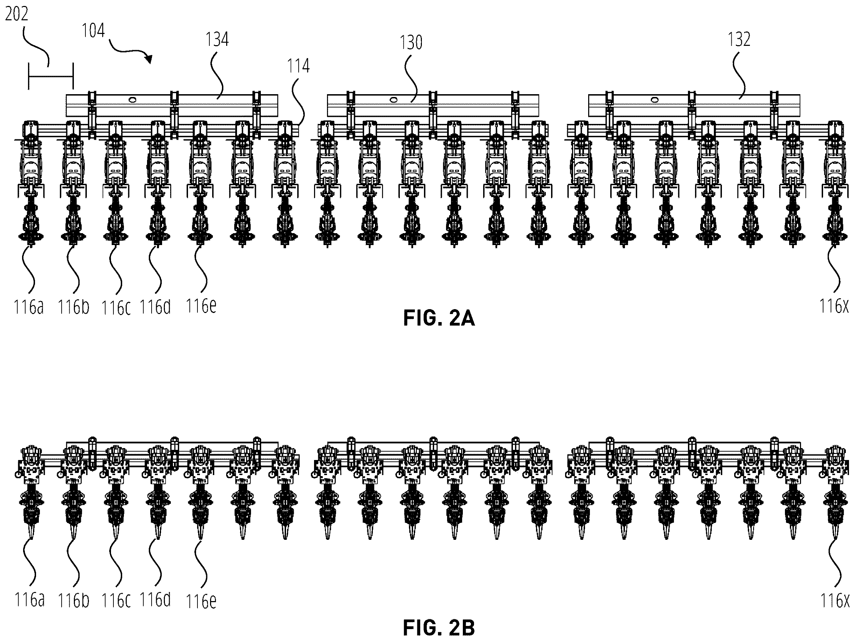

FIG. 2A is a simplified top view of a portion of the implement 104. FIG. 2B is a simplified rear view of a portion of the implement 104. As shown, the row units 116 are spaced evenly along the toolbar 114. Each of the row units 116 are configured to be in contact with the ground, and therefore the row units 116 can plant evenly spaced rows of seeds.

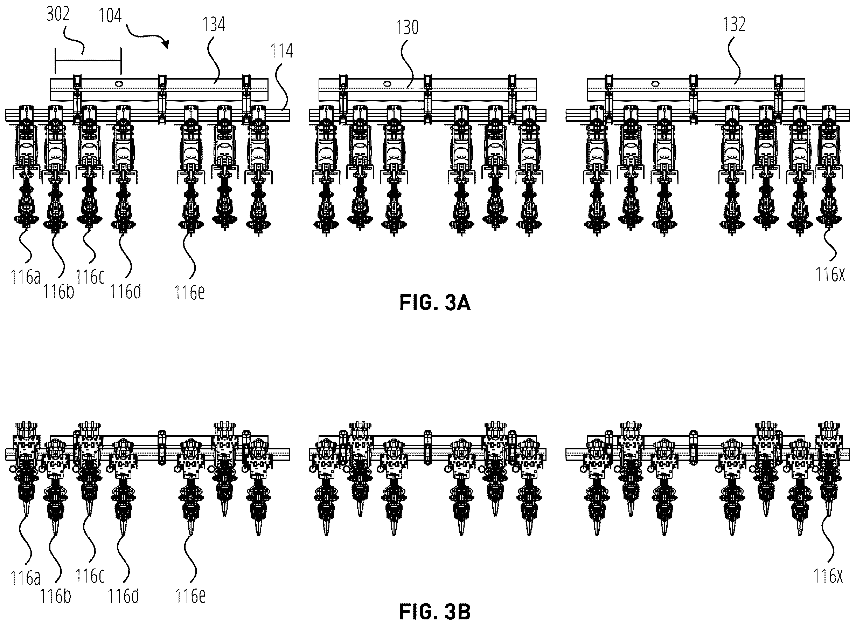

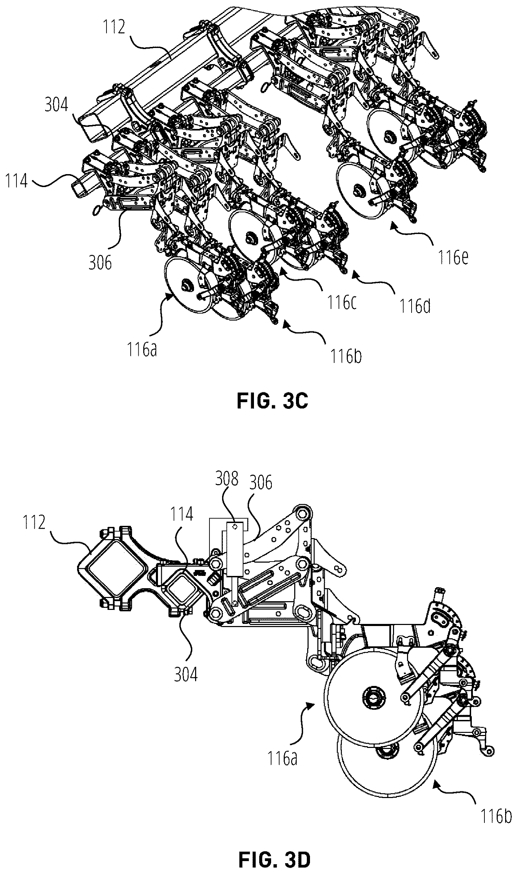

FIG. 3A is a simplified top view of a portion of the implement 104 in another configuration with a different row spacing, and FIG. 3B is a simplified rear view of a portion of the implement 104. FIG. 3C is a perspective view of a portion of the implement 104. FIG. 3D is a side view of the implement 104. In FIG. 3C and FIG. 3D, certain elements of the row units 116 are omitted to better illustrate the positions of ground-engaging tools. In particular, seed meters and hoppers are not shown in FIG. 3C or FIG. 3D.

In the configuration shown in FIG. 3A through FIG. 3D, the row spacing is wider than in FIG. 2A and FIG. 2B, and some of the row units 116 are not used for planting. Thus, the row units 116 are not spaced evenly along the toolbar 114. Some of the row units 116 are configured to be in contact with the ground, and others are not. The spacing between the row units 116 configured to be in contact with the ground is approximately uniform. Therefore, the row units 116 can plant evenly spaced rows of seeds, but with a wider row spacing than that shown in FIG. 2A and FIG. 2B.

FIG. 2A through FIG. 3D illustrates how the spacing may be changed by raising some row units 116 (i.e., row units 116a, 116b, 116c, 116d, 116e,... 116x) and moving some row units 116 along the toolbar 114. FIG. 2A shows twenty (20) row units 116 spaced at a first spacing 202 (e.g., 450 mm center-to-center) along the toolbar 114, which corresponds to the configuration shown in FIG. 2A and FIG. 2B. To convert the implement 104 to a second, different spacing 302 shown in the FIG. 3A, some of the row units 116 are raised to a stowed position, and some or all of the row unit 116 are moved. For example, and as best shown in FIG. 3B, eight (8) row units 116 in positions 1, 3, 6, 9, 12, 15, 18, and 20 may be raised to the stowed position, in which the row units 116 are out of contact with the ground. The row units 116 may be raised by moving a parallel linkage 306 connecting that row unit 116 to the toolbar 114. The parallel linkages 306 may typically be moved by a cylinder or other actuator 308, though other mechanisms are also possible.

Some or all of the other twelve (12) row units 116 (i.e., the "working" row units 116) may be moved along the toolbar 114 to the left or right such that the working row units 116 are spaced at the second spacing 302 (e.g., 700 mm center-to-center, which corresponds to the configuration shown in FIG. 3A through FIG. 3D). For example, the spacing 302 between row unit 116b and row unit 116d is the same as the spacing 302 between row unit 116d and row unit 116e.

Because row unit 116a and row unit 116c are stowed, they may be at any location along the toolbar 114 that avoids interference with the adjacent row units 116b, 116d. Some of the raised row units 116 may be moved along the toolbar as necessary to provide space for the working row units 116.

Two transformations are made to various row units 116--one in a lateral direction, and one to change from a working position to a stowed position (or vice versa). The transformation from one configuration to the other can be performed in any order. For example, all adjustments to any given row unit 116 may be performed at once, before moving to the next row unit 116. Alternatively, all lateral movements may be made first, followed by raising some row unit 116. As another example, all of the row units 116 may be raised, lateral movements may be performed, and then the working row units 116 may be lowered.

The row units 116 may be secured to the toolbar 114 by any appropriate means than enables the row units 116 to be moved laterally and secured in more than one location along the toolbar 114. For example, and as illustrated best in FIG. 3C, the row units 116 may be fixed to the toolbar 114 by one or more clamps 304. The clamps 304 may be loosened to move the row units 116, then retightened in the new location. Markings may assist an operator with aligning the row units 116. For example, markings may be color-coded for different row spacings. In some embodiments, markings may be etched or stamped into the toolbar 114.

In some embodiments, the row units 116 may be attached to row unit supports by alignment pins as described in International Patent Publication WO 2023/166372 A1, "Agricultural Implements Having Row Unit Supports and Alignment Pins, and Related Method of Configuring Such Implement," published September 7, 2023. As another exemplary alternative, row units may be slid along brackets as described in U.S. Patent Application Publication US 2024/0164246 A1, "Agricultural Implements Comprising Adjustable Row Unit Brackets with Locking Mechanisms, and Related Methods," published May 23, 2024. Other mounting systems are also known, such as described in U.S. Patent Application Publication US 2022/0030762 A1, "Row Unit Mounting System," published February 3, 2022; and U.S. Patent 9,635,799 B2, "Dynamic Row Spacing Planter System," granted May 2, 2017.

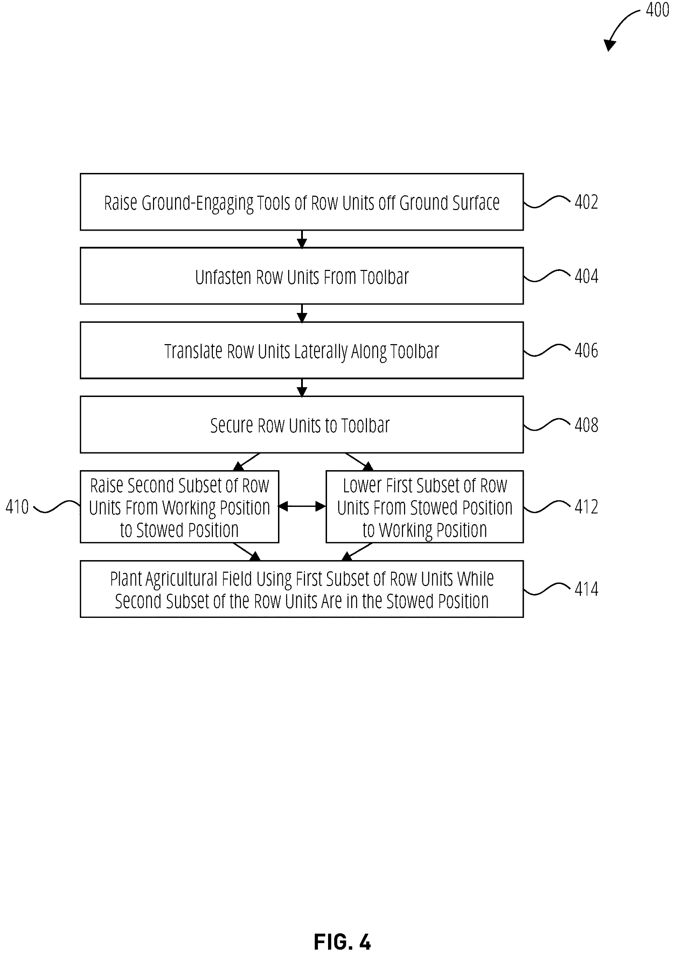

FIG. 4 is a simplified flow chart illustrating a method 400 of configuring and using an agricultural implement, such as the implement 104 shown in FIG. 1. The implement 104, as discussed above and shown in FIG. 1 through FIG. 3B, has a plurality of row units 116 comprising ground-engaging tools, which row units 116 are carried by a toolbar 114. The implement 104 has a first subset of row units 116 and a second subset of row units 116. Each of the row units 116 carried by the toolbar 114 is a member of exactly one of the first subset or the second subset. That is, each row unit 116 is either in the first subset (*i.e*., the "working" row units that selected to be used to plant a row) or in the second subset (*i.e*., the stowed row units that will not be used during the planting operation). All row units 116 may be in the first subset if all row units 116 are to be used (for example, to plant as many rows as possible with the implement 104 at relatively narrow row spacing, there may be no stowed row units).

In block 402, all of the ground-engaging tools of one or more row units are raised off the ground surface. This may be performed by, for example, actuating a cylinder associated with a parallel linkage coupling the row unit to the toolbar. As another example, the entire toolbar may be raised so that the row units do not touch the ground surface.

In block 404, at least some of the row units are unfastened from the toolbar. For example, if the row units are fixed to the toolbar by one or more clamps, then the clamps may be loosened or removed.

Generally, when all the row units are working row units (*e.g*., as shown in FIG. 2A and FIG. 2B), the spacing between adjacent row units is substantially uniform. In block 406, at least some of the row units are translated laterally along the toolbar such that spacing between adjacent row units of the first subset (*i.e*., the row units that will be working row units in the next planting operation) is substantially uniform and spacing between adjacent row units of the plurality (*i.e*., the set of all working and stowed row units) is non-uniform. The spacing between adjacent row units of the plurality is non-uniform because the number of stowed row units does not match the number of working row units. That is, there are different numbers of stowed row units between adjacent working row unit. For example, in FIG. 3A and FIG. 3B, some pairs of working row units have one stowed row unit between them, and other pairs of working row units have zero stowed row units between them.

There exist configurations in which the spacing between adjacent row units of the plurality is uniform, but these configurations would not require translating row units laterally. For example, switching from 20 rows spaced 350 mm apart to 10 rows spaced 700 mm apart would not require translating row units, and would not require non-uniform spacing. In this instance, alternating row units could simply be raised (stowed). However, these row spacings may not match what a farmer wishes to use (for example, in a field where 700 mm row spacing is appropriate for corn, 350 mm row spacing may be too narrow for beans). The translation of row units in block 406 overcomes this issue by allowing another spacing option (*e.g*., 450 mm for beans and 700 mm for corn).

The row units may be translated without disconnecting any electrical or hydraulic lines connected to the row units that are translated. If hydraulic and electrical lines are not disconnected, issues related to wear of connectors, breaking hydraulic seals, and capping connectors may be avoided. This also saves time and effort, avoids contact with potentially hazardous materials (*e.g*., hydraulic fluid), and avoids contamination of fluids and connectors.

Some row units are translated in a first direction, and other row units may be translated in a second direction opposite the first direction. That is, some may be translated left, and others are translated right. The appropriate direction and amount of movement depends on the row spacing desired. In some embodiments, the row units may be aligned with markings on the toolbar.

The row units may be translated by sliding them along the toolbar, which may include various mounting hardware. In some embodiments, the row units are translated manually (*e.g*., an operator physically moves the row units, for example after loosening a clamp or other fastener holding the row unit in place). In other embodiments, the row units may be translated using actuators, as described in U.S. Patent Application Publication 2024/0164246 A1, referenced above.

In block 408, after translating at least some of the row units, the row units are secured to the toolbar. If the row units are translated with actuators, then the actuators may automatically secure the row units to the toolbar when they stop moving. Therefore, the action of block 408 may occur automatically once the action of block 406 stops (and likewise, the action of block 404 occurs automatically when the action of block 406 begins). In other embodiments, the action of block 408 includes installing or tightening one or more clamps or other fasteners for each row unit.

In block 410, each of the second subset of the row units is raised relative to the toolbar from the working position to the stowed position using hydraulic cylinders connected to parallel linkages connecting each row unit to the toolbar. The second subset of the row units is raised to prevent contact between the ground-engaging tools of the second subset of the row units with a ground surface during a planting operation. Alternatively, or in addition, as shown in block 412, each of the first subset of the row units is lowered relative to the toolbar from the stowed position to the working position. In embodiments in which all of the row units were raised, as in block 402, the method may include block 412 but not block 410. After blocks 410 and/or 412, each row unit is in its selected position for planting or not planting (stowed). The row units may be raised or lowered automatically, such as based on a command from an operator at a control panel in a cab of a tractor. Furthermore, the command may automatically raise all of the second subset of row units at the same time, or may lower all of the first subset of row units at the same time. Thus, the operator may with one action direct a controller system to move the row units to a preselected configuration.

Once the row units are in position both laterally and either stowed or working, the implement is used to plant an agricultural field, as shown in block 414. The field is planted using the first subset of the row units while the second subset of the row units are carried by the toolbar in the stowed position.

Though depicted as a flow chart, the actions in FIG. 4 may be performed concurrently, and in some embodiments, some actions may be omitted.

The implement and methods described herein are beneficial because they enable a farmer to easily plant multiple crops with the same planter. For example, corn can be planted with a relatively wide row spacing (*e.g*., 700 mm, 750 mm, 800 mm, *etc*.) as shown in FIG. 3A and FIG. 3B, and beans can be planted with a relatively narrow row spacing (*e.g*., 450 mm, 500 mm, *etc*.) as shown in FIG. 2A and FIG. 2B. The conversion from one configuration to the other may be performed faster using the methods disclosed herein than with conventional methods. Furthermore, because no hoses are disconnected, the conversion can be performed in the field, without risking a hazardous material spill, and without requiring additional fluid. Because no row units are removed, there is no need for special lifting jigs or a place to store unused row units. Also, because all the row units stay connected to the toolbar, the weight of the toolbar does not change significantly during the conversion.

In some embodiments, such as if the implement includes actuators to move row units laterally, the entire conversion from one row spacing to another may performed automatically. For example, an operator may enter a command on a control panel (*e.g*., on the computer 122), and the implement 104 may move the row units 116 as required.

Even if the row units are moved laterally by a manual process, a benefit of using a controller system to move to a preselected configuration is that changing between configurations becomes relatively simple. When folding the implement for transport, the row units are typically in the lowered position relative to the toolbar (though not in contact with the ground because the toolbar itself is raised). This enables the implement to fold to meet transport regulations (e.g., maximum width). When traveling between fields, the operator may lower the second subset of row units, then fold the implement. Particularly if the implement carries a commodities tank (*e.g*., dry fertilizer), it is advantageous to automatically lower the unused lifted row units back toward the lowered position to create clearance to lift the toolbar fully to transport mode without colliding with the tank. After arriving at another field, the operator may raise the second subset of row units again after unfolding the implement. Thus, the operator need not exit the tractor to raise individual row units to prepare for the next planting operation.

All references cited herein are incorporated herein in their entireties. If there is a conflict between definitions herein and in an incorporated reference, the definition herein shall control.

## Claims

**1.** A method of using an agricultural implement having a plurality of row units comprising ground-engaging tools and carried by a toolbar, the plurality of row units comprising a first subset and a second subset, wherein each of the row units carried by the toolbar is a member of exactly one of the first subset or the second subset, the method comprising:
translating at least some of the row units laterally along the toolbar such that spacing between adjacent row units of the first subset is substantially uniform and spacing between adjacent row units of the plurality is non-uniform;
securing the at least some of the row units to the toolbar after translating the at least some of the row units;
raising each of the second subset of the row units relative to the toolbar with hydraulic cylinders connected to corresponding parallel linkage systems from a working position to a stowed position; and
planting an agricultural field using the first subset of the row units while the second subset of the row units are carried by the toolbar in the stowed position.

**2.** The method of claim 1, wherein raising each of the second subset of the row units relative to the toolbar from a working position to a stowed position comprises raising each of the second subset of the row units to prevent contact between the ground-engaging tools of the second subset of the row units with a ground surface.

**3.** The method of claim 1 or 2, further comprising raising all of the ground-engaging tools of a selected row unit off a ground surface before translating the selected row unit laterally along the toolbar.

**4.** The method of any one of claims 1 to 3, wherein translating the at least some of the row units laterally along the toolbar comprises translating the at least some of the row units without disconnecting any electrical or hydraulic lines connected to the at least some of the row units.

**5.** The method of any one of claims 1 to 4, wherein translating the at least some of the row units laterally along the toolbar comprises translating at least one row unit in a first direction and translating at least another row unit in a second direction opposite the first direction.

**6.** The method of any one of claims 1 to 5, wherein translating the at least some of the row units laterally along the toolbar comprises aligning the at least some of the row units with markings on the toolbar.

**7.** The method of any one of claims 1 to 6, wherein translating the at least some of the row units laterally along the toolbar comprises sliding the at least some of the row units along the toolbar.

**8.** The method of claim 7, wherein sliding the at least some of the row units along the toolbar comprises activating a plurality of actuators.

**9.** The method of claim 8, wherein securing the at least some of the row units to the toolbar comprises securing the at least some of the row units to the toolbar using the actuators.

**10.** The method of any one of claims 1 to 7, further comprising unfastening the at least some of the row units from the toolbar before translating the at least some of the row units laterally along the toolbar.

**11.** The method of claim 10, wherein unfastening at least some of the row units from the toolbar comprises loosening at least one clamp fixing each of the at least some of the row units to the toolbar.

**12.** The method of claim 11, wherein securing the at least some of the row units to the toolbar comprises tightening the at least one clamp.

**14.** A method of using an agricultural implement having a plurality of row units comprising ground-engaging tools and carried by a toolbar, the plurality of row units comprising a first subset and a second subset, wherein each of the row units carried by the toolbar is a member of exactly one of the first subset or the second subset, the method comprising:
unfastening at least some of the row units from the toolbar;
translating the unfastened row units laterally along the toolbar such that spacing between adjacent row units of the first subset is substantially uniform and spacing between adjacent row units of the plurality is non-uniform;
fastening the unfastened row units to the toolbar after translating the unfastened row units;
raising each of the second subset of the row units relative to the toolbar with hydraulic cylinders connected to corresponding parallel linkage systems from a working position to a stowed position; and
planting an agricultural field using the first subset of the row units while the second subset of the row units are carried by the toolbar in the stowed position.
